# EUROPEAN PATENT APPLICATION

(11) **EP 0 597 627 A1**
(43) Date of publication of application: **18.05.1994**
(21) Application number: 93308806.4
(22) Date of filing: 04.11.1993
(51) Int. Cl.: G02B 6/44

(54) **Optical transmission media having enhanced strength retention capabilities**

(30) Priority: 13.11.1992 US 975743
(71) Applicant: AT&T Corp., New York, NY 10013-2412 (US)
(72) Inventor: Blyler Jr.,Lee Landis, Basking Ridge, New Jersey 07920 (US); Petisce, James Raymond, Norcross, Georgia 30093 (US); Shea, John William, Chamblee, Georgia 30341 (US); Taylor, Carl Raymond, Lawrenceville, Georgia 30243 (US)
(74) Representative: Johnston, Kenneth Graham

(57) **Abstract**

An optical transmission medium in accordance with the present invention comprises a substrate material (21) and a coating system (25) which at least partially encloses the substrate material. The present invention addresses the unexpected and beneficial enhancement of the strength retention capabilities of an optical transmission medium experienced when a coating system (25) provides a high quality interface between the coating and the optical transmission medium. The coating system (25) comprises a curable material. Also included in the coating system (25) is a component in the form of an adhesion promoter capable of enhancing the strength retention characteristics of the optical substrate material. In the preferred embodiment of the present invention, the particular adhesion promoter component includes an alkoxy silane containing at least one organic substituent carrying at least one mercaptyl hydrogen atom capable of reacting by Michael addition. Furthermore, the alkoxy silane may be gamma-mercaptopropyltrimethoxysilane and preferably comprises from about 0.5% to about 5% of the coating system.

## Description

### Technical Field

This invention relates to optical transmission media having enhanced strength retention capabilities.

### Background of the Invention

Optical fibers, such as fused silica fibers, are receiving increasing attention as a medium for the transmission of communication signals. Although such low loss glass acts as an excellent transmission medium, protective coatings are necessary additions to the glass fibers in order to make the fibers practical for use in communication systems. In general, these protective coatings are polymeric and provide mechanical protection of the glass from abrasion and the environment, as well as minimize microbending losses associated with cabling and installation. In addition, some fiber coatings can be color coded to allow easy identification of particular individual fibers in a multi-fiber cable.

However, no single coating material has been found to be the best at satisfying all of these requirements. For example, polymer coatings, especially dual coatings consisting of an inner low modulus polymer and an outer high modulus polymer, have been shown to be especially resistant to microbending losses. On the other hand, polymers are very permeable to environmental agents, such as water, which reduce the mechanical strength of the fiber. Coatings such as amorphous carbon and titanium carbide have been shown to provide a hermetic barrier to moisture, but are generally ineffective at preventing microbending losses.

Polymer coatings have frequently been regarded as an inert layer which prevents external mechanical contact with the fiber surface. However, a number of investigations have shown that properties of the polynier such as adhesion to the glass and water permeability may affect certain mechanical properties of the coated fiber. Some of the particular effects on mechanical properties are described in more detail within a series of papers by T. Wei, B.J. Skutnik, B. D. Munsey and C. T. Brucker.

It is well appreciated that the strength characteristics of the fibers are an important factor in the economic feasibility of an optical fiber transmission system. However, to date, there has been no recognition or appreciation as to how strength characteristics, and specifically strength retention capabilities of the fiber itself, may be affected by various chemical components present within a coating applied to an optical fiber.

What is needed, and seemingly not recognized by the existing prior art, is an appreciation that the long-term mechanical reliability of a glass fiber itself, and specifically the strength retention capabilities of the glass, may be dramatically enhanced by the application of particular types of coating compositions. In general, the present invention establishes that a higher quality of interface between the coating layer and the glass improves the overall strength characteristics for the glass itself. More specifically, the present invention identifies at least one specific chemical characteristic and one property of the coating composition applied to the glass fibers which act to increase the quality of the coating/fiber interface and thereby dramatically enhance the strength retention capabilities of the glass fiber itself.

### Summary of the Invention

The foregoing problems of the prior art have been overcome with the present invention as set forth in the claims.

### Brief Description of the Drawing

FIG. 1 is a schematic view of a manufacturing line which is used to provide one or multiple coating materials for a drawn optical fiber;
FIG. 2 is an end view in section of an optical fiber having a coating provided by portions of the apparatus of FIG. 1;
FIGS. 3A and 3B are photographic illustrations which depict the relative increase in the quality of the coating/glass interface for two particular coating compositions discussed herein; and
FIG. 4 graphically depicts the enhanced strength retention capabilities in accordance with the present invention of particular coating compositions discussed herein.

### Detailed Description

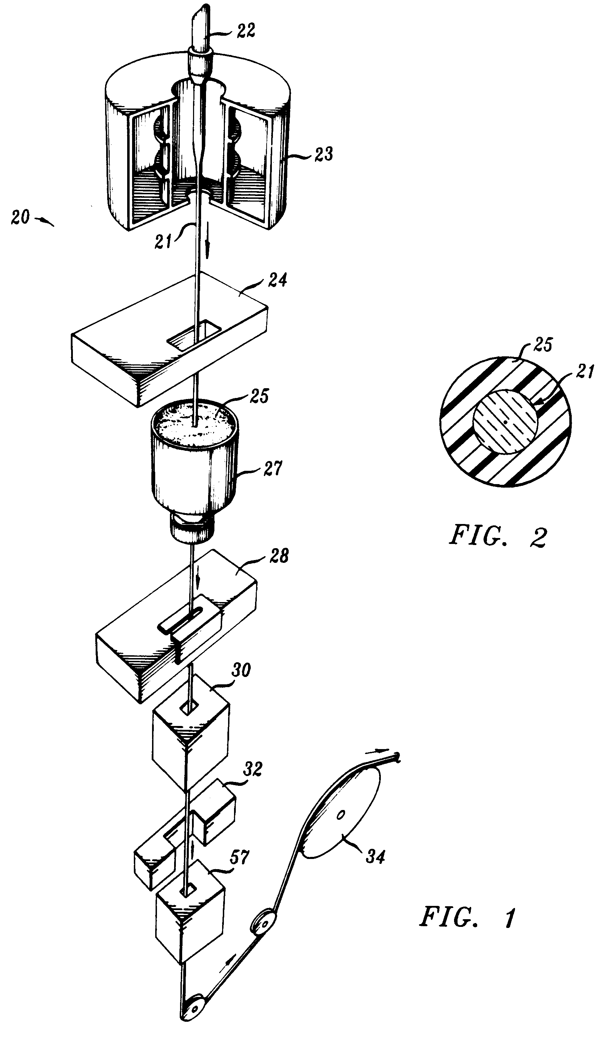

Referring now to FIG. 1, there is shown an apparatus which is designated generally by the numeral 20 and in which is used to draw optical fiber 21 from a specially prepared cylindrical preform 22 and for then coating the fiber. The optical fiber 21 is formed by locally and symmetrically heating the preform 22, typically 7 to 25 mm in diameter and 60 cm in length, to a temperature of about 2000 °C. As the preform is fed into and through a furnace 23, fiber 21 is drawn from the molten material.

As can be seen in FIG. 1, the elements of the draw system include the furnace 23 wherein the preform is drawn down to the fiber size after which the fiber 21 is pulled from the heat zone. The diameter of the fiber 21 is measured by a device 24 at a point shortly after the fiber is formed and this measured value becomes an input into a control system. Within the control system, the measured diameter is compared to the desired value and an output signal is generated to adjust the draw speed such that the fiber diameter approaches the desired value.

After the diameter of the fiber 21 is measured, a protective coating 25 (see also FIG. 2) is applied to it by apparatus 27. Preservation of fiber strength requires the application of the protective coating, which shields newly drawn fiber from the deleterious effects of the atmosphere. This coating must be applied in a manner that does not damage the surface of the fiber 21 and such that the coated fiber has a predetermined diameter and is protected from abrasion during subsequent manufacturing operations, installation and service. Minimizing attenuation requires the selection of a suitable coating material and a controlled application of it to the fiber. Such a coating apparatus may be one such as that described in U.S. Patent 4,474,830. Minimizing diameter variation which in turn minimizes the losses due to misalignment at connector and splice points requires careful design of the draw system and the continuous monitoring and control of the fiber diameter during the drawing and the coating steps of the process. Then, the coated fiber 21 is passed through a centering gauge 28.

After the coating material has been applied to the drawn fiber, the coating material must be cured. Accordingly, the optical fiber having the coating material thereon is passed through a device 30 for curing the coating and a device 32 for measuring the outer diameter of the coated fiber. Afterwards, it is moved through a capstan 34 and is spooled for testing and storage prior to subsequent cable operations.

For rapid application and cure, coatings which cure on exposure to radiation, preferably ultraviolet radiation, are needed. However, radiation-curable coatings for optical glass fiber may be of various types, but it is always necessary to provide the low to moderate tensile modulus needed in a coating which will contact the glass, to employ a polyethylenic polymeric organic compound. Many appropriate polyethylenic organic compounds are known and are deemed acceptable and within the scope of the present invention.

In accordance with the present invention, a coating is applied to an optical glass fiber for the purpose of establishing a high quality coating/fiber interface which actually enhances the strength retention capabilities of the glass itself. In order to test and quantitatively measure the breaking strength of the optical fibers, any well known testing technique may be used. To determine strength retention capabilities of a particular coated fiber, a series of breaking strength tests are performed on a coated optical fiber over a period of time.

One particular method acceptable for measuring fiber strength is generally referred to as a tensile method and is described in T. J. Krause and C. J. Shute, "Temperature Dependence of the Transition in Static Fatigue of Fused Silica Optical Fiber," Adv. Ceramic Mat. 3 (1988) 118-121. According to this technique, a straight section of fiber is subjected to a purely tensile load while exposed to a controlled test environment. Yet another acceptable technique for determining the fiber breaking strength is by utilizing the two-point bending measurement method as described, for example, in P. W. France et al., "Strength and Fatigue of Multicomponent Optical Glass Fibres," J. Mat. Sci. 18 (1983) 785-792. In this technique, a fiber sample is bent through 180° between a pair of parallel jaws to form a U-shape. The sides of the U are driven together at a constant speed, decreasing the radius of curvature of the fiber until it fractures. The strength of the fiber is calculated from the jaw separation at the instant of fracture.

Regardless of which method is used to quantify the fiber breaking strength, it is an important characteristic of the fiber to know how the strength changes over time. Such periodic values of a fiber strength measurement provide an indication of that fiber's strength retention capabilities. The strength retention value of a fiber is as crucial a consideration as any other type of fiber strength indicator when concerned with the practical implementation of a particular coated fiber within a communication system.

In accordance with the present invention, an unexpected and beneficial enhancement of the strength retention capabilities of an optical transmission medium is achievable when a high quality interface is established between the coating layer and the transmission medium. Interfaces of adequate quality to enhance strength retention capabilities as set forth herein may be achieved in a number of different manners. The scope of this invention is directed toward all obvious utilizations of the here-to-date unrecognized relationship between the quality of the coating/fiber interface and the ultimate strength retention capabilities of the fiber itself.

At least one particular embodiment of the present invention capable of providing an adequate interface to enhance strength in accordance with the present invention involves coating an optical transmission medium with a liquid radiation-curable polyethylenically unsaturated coating composition having a certain adhesion promoter therein. Specifically, the adhesion promoter disclosed herein has incorporated therein from about 0.5 to about 5 weight percent of a alkoxy-containing silane containing an organic substituent which carries at least one active hydrogen atom which is capable of reacting with other coating components having ethylenic unsaturation by Michael addition. In addition, the single active hydrogen atom may be the mercaptyl hydrogen atom.

It should also be noted that the particular alkoxy-containing silane used in accordance with the present invention can vary depending upon the particular application and the overall chemical characteristics of the specific coating composition used. However, the preferred embodiment of the present invention presently employs the compound gamma-mercaptopropyltrimethoxysilane.

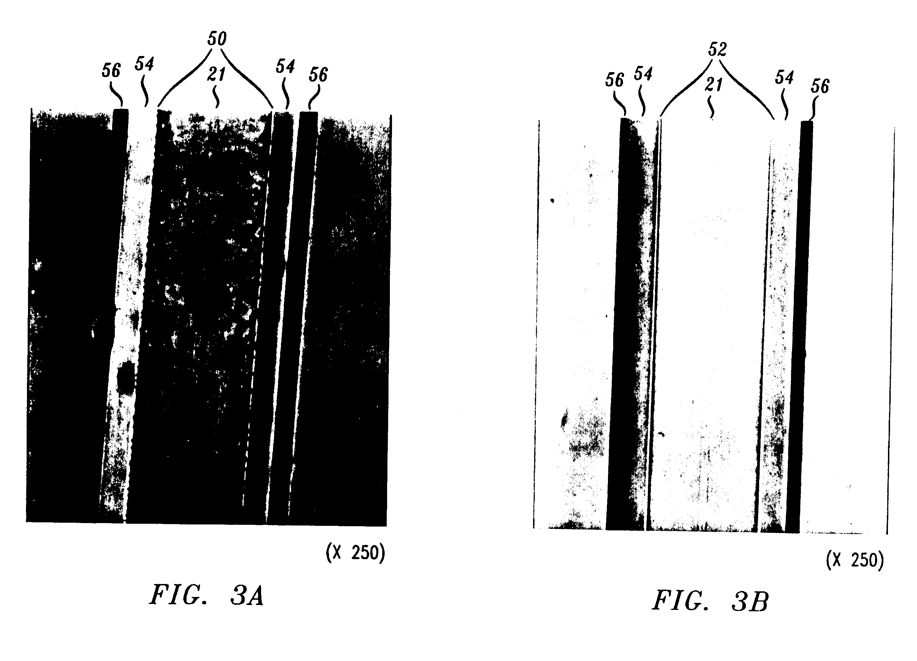

To illustrate the present invention, a series of different coating compositions was applied to substantially similar optical glass fibers for strength retention comparison tests. FIGS. 3A and 3B are photographic illustrations of the cross-sections of two particular coated fibers.

As tested, the coating composition applied to the coated fiber depicted in FIG. 3A contains an adhesion promoter which is incapable of undergoing a Michael addition reaction with ethenically unsaturated components which are present in the overall coating composition. To the contrary, the composition applied to the coated fiber depicted in FIG. 3B incorporates an adhesion promoter which contains an organic substituent having a single mercaptyl hydrogen atom. The presence of the mercaptyl atom allows a Michael addition reaction to occur.

As shown, the two coated fibers exhibit differing qualities of coating/fiber interfaces. Specifically, after the two fibers have been immersed in room temperature water for at least two hours, the coated fiber of FIG. 3A has a much more jagged and less defined coating/fiber interface than those shown in FIG. 3B. It has been recognized that the majority of the effect of water on the interface occurs within the first two hours of immersion. Furthermore, there appears to be no substantial change in the interface when immersed longer than 24 hours. The coating/fiber interfaces are generally depicted as elements 50 and 52 on FIGS. 3A and 3B.

With further reference to FIGS. 3A and 3B, it should be noted that elements 50 and 52 identify the glass fiber cores of coated fibers A and B, respectively. As stated earlier, these glass fibers are substantially similar to each other in construction and operation. Reference numerals 54 and 56 identify the associated primary and secondary coatings of coated fibers A and B, respectively.

At present, it is a relatively standard practice to expose a sampling of coated fiber to adverse environmental conditions and perform various tests before, during and/or after such exposure as an attempt to gain knowledge which may be used to project the long-term operational reliability of the coated fiber. Often an elevated temperature and humidity environment is utilized to simulate an accelerated aging process. However, it should be noted that in addition, the coated fibers must be able to maintain operational performance levels even after extended exposure to oil or water. In particular, many coated fibers are cabled within plastic jackets and totally immersed in an oil-based material which may be used to prevent the ingress and migration of water within the cable, for example.

In order to quantify the aspects of the present invention, a series of four different coated glass fibers was placed in a controlled environment where each was aged at a constant temperature of 85 °C with a relative humidity of 85%. After ten (10) days of exposure to such conditions, strength tests were carried out on the aged fibers according to criteria established by the Electronic Industry Association (EIA), see EIA-455-28B, using a gauge length of 50 cm and a strain rate of 2.5% per minute.

The particular distinguishing characteristics of each of the four coated fibers identified herein as coated fibers A, B, C and D, are set forth in table form immediately below. As shown, the tested fibers differ in that two different adhesion promoters are utilized in the coating compositions. Furthermore, each of the two coating composition types were tested with known corrosive components present as well as with only substantially low levels of corrosive components present.

| **Coated Fiber** | **Adhesion Promoter** | **Corrosive Component** |
|---|---|---|
| A | Alkoxy-containing silane (# 1) | Substantially low levels |
| B | Methacryloxypolyalkoxysilane (# 2) | Substantially low levels |
| C | Alkoxy-containing silane (# 1) | Corrosive components known present |
| D | Methacryloxypolyalkoxysilane (# 2) | Corrosive components known present |

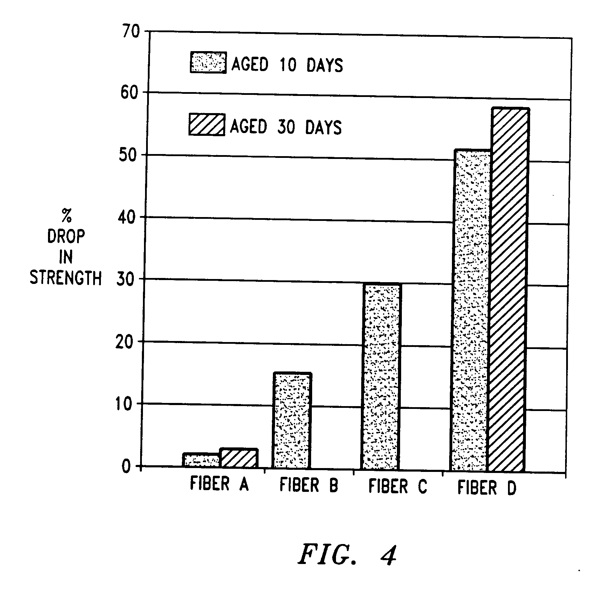

The strength retention benefits of a high quality coating-glass interface, as is obtained with the particular coating composition disclosed herein, are shown in FIG. 4. As illustrated, for coated fiber A whose coating composition includes adhesion promoter, referred to herein as adhesion promoter # 1, the strength after 10 days of aging at 85°C in 85% RH is reduced only sightly (∼2%). However, for coated fiber B whose coated composition includes a different adhesion promoter, referred to herein as adhesion promoter # 2, there is a substantially greater reduction in strength, specifically approximately 15%. The main difference between the two coating compositions is that adhesion promoter # 1, found in coated fiber A, is an alkoxy-containing silane having a single mercaptyl hydrogen atom, whereas adhesion promoter # 2, found in coated fiber B, is a methacryloxypolyalkoxysilane. It should be noted that the coating materials of both coated fibers A and B contain substantially low levels of corrosive components.

In addition to the two non-corrosive coatings described above, identical tests were performed on two additional coated fibers whose coatings knowingly contain some corrosive components. These coated fibers are generally identified herein as fibers C and D with their respective strength test results also depicted in FIG. 4. As with the previously described tests, the major difference between coated fibers C and D is that the adhesion promoter included in the coating composition applied to fiber C is alkoxy-containing silane, adhesion promoter # 1, while the adhesion promoter included in the coating composition applied to fiber D is methacryloxypolyalkoxysilane, adhesion promoter # 2.

As depicted in FIG. 4, and consistent with the results of the two corrosive-free coated fibers, fiber C, the coating composition having alkoxy-containing silane with a single mercaptyl group as the adhesion promoter, has substantially better strength retention capabilities than fiber D which has methacryloxypolyalkoxysilane as an adhesion promoter. Specifically, after 10 days of aging at 85 °C and 85% RH, fiber D demonstrated a strength reduction of approximately 52% whereas fiber C exhibited much better strength retention by only experiencing about a 30% drop or decrease in strength after 10 days aging.

As follow-up to the previous 10-day aging test described, coated fibers A and D were allowed to continue aging at 85°C with 85% RH for an additional 20 days and tested for tensile strength once again after a total of 30 days aging. As depicted by the cross-hatched bar graph portions of FIG. 4, neither coated fiber A, which has alkoxy-containing silane as its adhesion promoter and having no corrosive coating components present, nor coated fiber D, which has methacryloxypolyalkoxysilane as its adhesion promoter and having some corrosive coating components present, experienced significant further reductions in tensile strength for the fibers aged the additional 20 days.

Therefore, it appears from the test results presented and described herein that the quality of the interface established between a coating and an optical glass fiber has a direct relationship with the strength retention capabilities exhibited by the glass. In particular, an increase in the quality of the coating/fiber interface has been shown to unexpectedly correspond to a significant increase in the strength retention capabilities of the glass itself.

To date, the only concern regarding the properties of the adhesion promoter is that it act to enhance the adhesive bond between the primary coating layer and the glass. In particular, it is believed that the preferred embodiment of the present invention identifies and describes a novel and non-obvious use and/or benefit for particular types of the adhesion promoter compositions presently being used. However, in a broader sense, the present invention establishes that by increasing the quality of the interface between a coating layer and the optical transmission medium that unpredictably, certain characteristics of the medium itself, generally glass, are substantially enhanced. Specifically, the ability of the glass to maintain its initial strength levels for a much longer period of time.

## Claims

1. An optical transmission medium which comprises:
an optical transmission medium;
a coating system which substantially encloses said transmission medium, said coating system which substantially encloses said transmission medium, said coating system comprising a radiation-curable material which has been cured; and
a high quality interface established between the transmission medium and the coating system, wherein said interface provides said transmission medium with enhanced strength retention capabilities.

2. The optical transmission medium of claim 1 wherein the enhanced strength retention capabilities of the transmission medium are substantially maintained even through extended exposure of the cured medium to an environment exhibiting elevated temperature and humidity values.

3. The optical transmission medium of claim 1 wherein the enhanced strength retention capabilities of the transmission medium are substantially maintained even when the cured medium is immersed in water.

4. The optical transmission medium of claim 1 wherein the coating system involved in establishing the high quality interface comprises an adhesion promoter having an alkoxy-containing silane which contains at least one organic substituent carrying at least one mercaptyl hydrogen atom capable of reacting by Michael addition.

5. The optical transmission medium of claim 4 wherein the alkoxy-containing silane strength retention enhancing adhesion promoter comprises from about 0.5 to about 5 weight percent of the coating system.

6. A method of making a coated elongated glass stand material, said method comprising the steps of:
moving an elongated glass strand along a path of travel;
applying a coating system comprising a radiation-curable material to the glass strand;
enhancing the strength retention capabilities of the glass strand itself by establishing a high quality interface between the glass strand and the coating system;
curing the radiation-curable material; and
taking up the coated elongated strand material.

7. The method of making a coated elongated glass strand material of claim 6 wherein the enhanced strength retention capabilities of the glass strand are substantially maintained even through extended exposure of the cured medium to an environment exhibiting elevated temperature and humidity values.

8. The method of making a coated elongated glass strand material of claim 6 wherein the enhanced strength retention capabilities of the transmission medium are substantially maintained even when the cured medium is immersed in water.

9. The method of claim 6 wherein the coating system involved in establishing the high quality interface comprises an adhesion promoter having an alkoxy-containing silane which contains at least one organic substituent carrying at least one mercaptyl hydrogen atom capable of reacting by Michael addition.

10. The method of claim 9 wherein the alkoxy-containing silane strength retention enhancing adhesion promoter comprises from about 0.5 to about 5 weight percent of the coating system.
